# EUROPEAN PATENT APPLICATION

(11) **EP 2 450 799 A1**
(43) Date of publication of application: **09.05.2012**
(21) Application number: 11187824.5
(22) Date of filing: 04.11.2011
(51) Int. Cl.: G06F 13/16, G06F 15/78

(54) **Heterogeneous computing system comprising a switch/network adapter port interface utilizing load-reduced dual in-line memory modules (LR-DIMMS) incorporating isolation memory buffers**

(30) Priority: 05.11.2010 US 410676 P; 01.11.2011 US 286996
(71) Applicant: SRC Computers Inc., Colorado Springs, CO 80907 (US)
(72) Inventor: Burton, Lee A., Divide, CO 80814 (US); Seeman, Thomas R., Colorado Springs, CO 80919 (US); Huppenthal , Jon M., Colorado Springs, CO 80908 (US)
(74) Representative: Style, Kelda Camilla Karen

(57) **Abstract**

A heterogeneous computing system comprising a switch/network adapter port interface utilizing load-reduced dual in-line memory modules (LR-DIMMs) incorporating isolation memory buffers. In a particular embodiment of the present invention the computer system comprises at least one dense logic device and a controller coupling it to a memory bus. A plurality of memory slots are coupled to the memory bus and an adaptor port is associated with some number of the plurality of memory slots, each of the adapter ports including associated memory resources. A direct execution logic element is coupled to at least one of the adapter ports. The memory resources are selectively accessible by the at least one dense logic device and the direct execution logic element.

## Description

### CROSS REFERENCE TO RELATED PATENT APPLICATIONS

The present invention is related to, and claims priority from, United States Provisional Patent Application 61/410,676, filed November 5, 2010, the disclosure of which, inclusive of all patents and documents incorporated therein by reference, is herein specifically incorporated by this reference in its entirety.

### BACKGROUND OF THE INVENTION

The present invention relates, in general, to the field of reconfigurable computing. More particularly, the present invention relates to a heterogeneous computing system comprising a switch/network adapter port interface utilizing load-reduced dual in-line memory modules (LR-DIMMs) incorporating isolation memory buffers.

SRC Computers LLC's proprietary switch/network adapter port SNAP™ interface allows commodity microprocessor boards to connect to, and share memory with, SRC Computer's reconfigurable MAP^{®} processors and multi-ported common memory (MPCM) nodes that comprise certain SRC^{®} systems. By using the SNAP interface to connect to the microprocessors' memory subsystem instead of its I/O subsystem, SRC systems can sustain significantly higher interconnect bandwidths. In addition, the SNAP interface comprises an intelligent direct memory access (DMA) controller and can either connect directly to a single MAP processor or to the SRC Hi-Bar^{®} switch for system-wide access to multiple MAP processors, other microprocessors or MPCM. The SNAP interface is designed to plug directly into the DIMM connectors on a commodity microprocessor board. For embedded applications, the SNAP interface form factor may be altered to fit within the desired envelope. (SNAP™, MAP^{®}, SRC^{®} and Hi-Bar^{®} are trademarks of SRC Computers LLC, assignee of the present invention).

The proprietary SNAP interface is disclosed, for example, in the following United States Patents assigned to SRC Computers LLC: U.S. 6,996,656 for "System and Method for Providing an Arbitrated Memory Bus in a Hybrid Computing System"; U.S. 7,124,211 for "System and Method for Explicit Communication of Messages Between Processes Running on Different Nodes in a Clustered Multiprocessor System"; U.S.7,197,575 for "Switch/Network Adapter Port Coupling a Reconfigurable Processing Element to One or More Microprocessors for use with Interleaved Memory Controllers"; U.S. 7,373,440 for "Switch/Network Adapter Port for Clustered Computers Employing a Chain of Multi-Adaptive Processors in a Dual In-Line Memory Module Format"; U.S. 7,406,573 for "Reconfigurable Processor Element Utilizing Both Coarse and Fine Grained Reconfigurable Elements"; U.S. 7,421,524 for "Switch/Network Adapter Port for Clustered Computers Employing a Chain of Multi-Adaptive Processors in a Dual In-Line Memory Module Format"; U.S. 7,424,552 for "Switch/Network Adapter Port Incorporating Shared Memory Resources Selectively Accessible by a Direct Execution Logic Element and One or More Dense Logic Devices"; U.S. 7,565,461 for "Switch/Network Adapter Port Coupling a Reconfigurable Processing Element to One or More Microprocessors for use with Interleaved Memory Controllers" and U.S. 7,680,968 for "Switch/Network Adapter Port Incorporating Shared Memory Resources Selectively Accessible by a Direct Execution Logic Element and One or More Dense Logic Devices in a Fully Buffered Dual In-Line Memory Module Format (FB-DIMM)", the disclosures of which are herein specifically incorporated by this reference in their entirety.

LR-DIMMs have recently been introduced as a new memory technology in which all signal lines are buffered. They are a follow on technology from fully-buffered DIMMs (FB-DIMMs) and function in a manner similar to registered DIMMs (RDIMMs) in that the address, clock and control signals are buffered through a register. However, the fundamental distinction over RDIMMs is that LR-DIMMs also buffer the data lines through bi-directional drivers. The basics of LR-DIMMs and their architecture are described, for example, in the following white papers available from Inphi Corporation, Santa Clara, CA: "Increasing Computing Platform Efficiency Through Innovative Memory Architecture" and "Introducing LRDIMM - A New Class of Memory Modules". The disclosures of these white papers are herein specifically incorporated by this reference in their entirety.

### SUMMARY OF THE INVENTION

The need for microprocessor based computer systems to connect to an ever greater volume of high-speed SDRAM memories is an issue of ever increasing importance which is exacerbated further by the increasing number of processor cores that are becoming available. However, as the speed of the SDRAM components and their interconnects has continued to increase, the number of such devices that can be reliably interconnected has been diminishing. Several attempts have been, and continue to be made to address this issue. The switch/network adapter port interface of the present invention advantageously makes use of the isolation memory buffers of commercially available LR-DIMMs in a computer system that utilizes both a microprocessor (a dense logic device or DLD) and a direct execution logic (DEL) device such as an SRC Computers MAP processor.

There are numerous benefits to use of LR-DIMM memory buffers instead of high speed field effect transistor (FET) switches currently used in conjunction with the existing SNAP interface. For example, with the smaller physical size and package used by the memory buffers, the board layout for the SNAP interface is made simpler and results in improved signal integrity with a higher speed of operation in a less expense package. Also, with a single central device, the routing of a single enable line instead of multiple FET control lines further easies the signal routing of the board.

The isolation memory buffers of LR-DIMM devices are designed to provide segmentation and replication of the high speed memory buses, thus the tri-state capability of the memory buffer activates more rapidly than an FET can turn on/turn off. This allows for more rapid handoff of the shared memory than can be achieved with conventional FET switches. The isolation effects of the LR-DIMM memory buffer also provide a means of increasing the number of private memory regions in the system. The output tri-state capability of the isolation memory buffers also allows devices connected to multiple buffers to access the same memory components which is a core concept of the shared memory SNAP interface.

This faster operation, in turn, reduces the need for the microprocessor to have to execute special code or use special firmware in order to utilize the SNAP interface. As a result, the switch/network adapter port interface of the present invention enables it to be utilized in conjunction with many different microprocessor architectures including those available from Intel, IBM and AMD and the like. This allows application portability across various vendors' computer platforms.

Due to the faster memory hand off, applications that require faster microprocessor and MAP processor interaction can now be performed. These include but are not limited to computer-aided design/ computer-aided engineering (CAD/CAE), financial analytics, business analytics, pattern searching (text/data), digital image processing, Database data sorting, database key hashing, System dynamics simulation (molecular, cosmology, fluids and the like), system functional simulation, system modeling, data streaming, network traffic analysis, network intrusion detection, nonlinear partial differential equation solving, statistical analysis, regular expression search/matching (text/data), client/server applications, digital signal processing, data encryption/decryption, data compression/decompression and computational fluid dynamics.

The faster hand off cycle time also results in a tighter coupling of the Implicit microprocessor and Explicit MAP processor, which further enhances the unification of these two processing types. The improved unification of the implicit and explicit processing elements then delivers higher system performance than can otherwise be achieved with either processor type alone.

This improved unification also increases the number of application domains across which SRC Computers' proprietary IMPLICIT+EXPLICIT™ Architecture (trademark of SRC Computers LLC) can remove barriers attributable to Amdahl's law. This is accomplished by virtue of the explicit MAP Processor reducing the total number of processing elements required to accomplish the parallel portion of the application while the implicit microprocessor accomplishes the serial portion of the application.

A system configured with the switch/network adapter port interface of the present invention can also utilize standard memory DIMMs resulting in more available options in terms of memory size, speed and availability while also allowing the connection to any type of non-memory device having a standard DIMM interface such as field programmable gate arrays (FPGAs) or other special processing application specific integrated circuits (ASICs).

The switch/network adapter port interface of the present invention disclosed herein utilizes commercially available LR-DIMMs and will function in conjunction with any system that supports this memory type. In addition, rank multiplication can be utilized to provide additional memory for both the explicit and implicit processors. Moreover, with rank multiplication, a system that only supports a single rank of memory can also be used.

Particularly disclosed herein is a computer system comprising at least one dense logic device and an interleaved controller for coupling the at least one dense logic device to a control bus and memory bus. A plurality of memory slots are coupled to the memory bus and an adaptor port is associated with at least two of the plurality of memory slots, with each of the adapter ports including associated memory resources. A direct execution logic element is coupled to at least one of the adapter ports, with the memory resources being selectively accessible by the at least one dense logic device and the direct execution logic element.

Also particularly disclosed herein is a computer system comprising at least one dense logic device and at least one controller for coupling the at least one dense logic device to a control bus and one or more memory buses. A plurality of memory slots are coupled to the one or more memory buses and one or more adaptor ports are associated with at least one of the plurality of memory slots, with each of the one or more adapter ports including associated memory resources. A direct execution logic element is coupled to at least one of the adapter ports, with the memory resources being selectively accessible by the at least one dense logic device and the direct execution logic element.

Still further particularly disclosed herein is a computer system comprising at least one dense logic device and at least one controller for coupling the at least one dense logic device to a control bus and a memory bus that supporting a single rank of memory. An isolation memory buffer is coupled to the memory bus and a plurality of memory buses are connected to the isolation buffer. One or more adaptor ports are associated with the memory bus, each of the adapter ports including associated memory resources. A direct execution logic element is coupled to at least one of the adapter ports with the memory resources being selectively accessible by the at least one dense logic device and the direct execution logic element.

### BRIEF DESCRIPTION OF THE DRAWINGS

The aforementioned and other features and objects of the present invention and the manner of attaining them will become more apparent and the invention itself will be best understood by reference to the following description of a preferred embodiment taken in conjunction with the accompanying drawings, wherein:
Fig. 1 is a high level block diagram of a representative embodiment of a system for possible implementation of the computational unification system and method of the present invention in the form of an IMPLICIT + EXPLICT™ architecture;
Fig. 2 is a functional block diagram of a MAP^{®} processor comprising reconfigurable direct execution logic for use as an explicit device in the preceding figure utilizing field programmable gate arrays;
Fig. 3 is a functional block diagram of a multi-ported common memory providing support for a dense logic device such as a commodity microprocessor and up to three MAP processors;
Fig. 4 is a functional block diagram of a single MAP processor MAPstation™;
Fig. 5 is a functional block diagram of a MAPstation system comprising three of the MAP processors of Fig. 2 interconnected via a multi-ported common memory module;
Fig. 6 is a simplified illustration of a load-reduced dual in-line memory module (LR-DIMM) including the memory buffer thereof;
Fig. 7 is a block diagram of a representative embodiment of a computing system comprising a switch/network adapter port interface in accordance with the present invention incorporating a direct execution logic element in a general purpose microprocessor based computer system;
Fig. 8 is a block diagram of another representative embodiment of a computing system comprising a switch/network adapter port interface in accordance with the present invention in which the switch/network adapter port interface replaces one of the LR-DIMMs accessed by the microprocessor; and
Fig. 9 is a block diagram of yet another representative embodiment of a computing system comprising a switch/network adapter port interface in accordance with the present invention in which the rank multiplier capability of the LR-DIMM is utilized to enable the switch/network adapter port interface to connect into a microprocessor system that only supports a single rank of memory.

### DESCRIPTION OF A REPRESENTATIVE EMBODIMENT

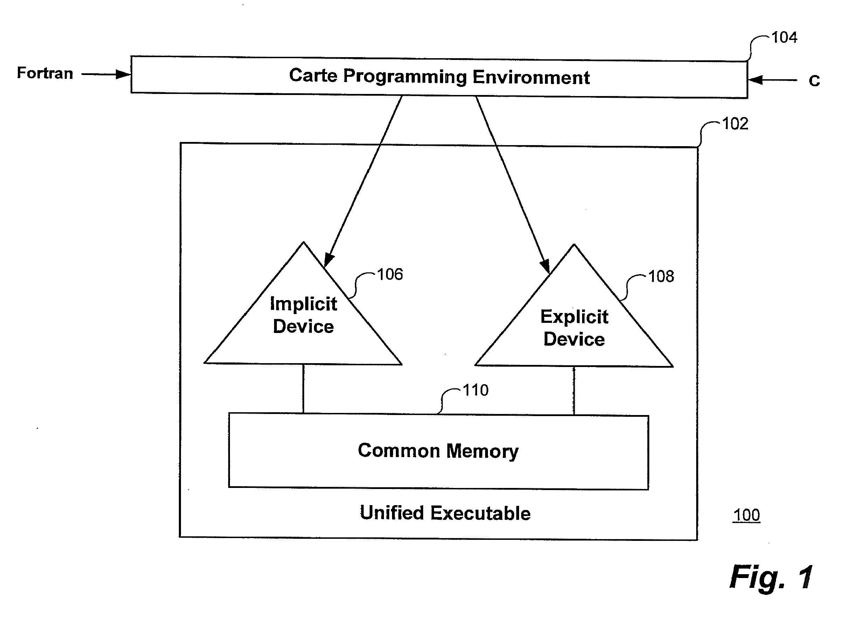

With reference now to Fig. 1, a high level block diagram of a representative embodiment of a system 100 for possible implementation of the computational unification system and method of the present invention is shown in the form of an IMPLICIT+EXPLICT architecture.

The system 100 comprises, in pertinent part, a unified executable 102 produced through the Carte programming environment 104 which allows for application source files being input in, for example, the Fortran or C programming languages. An implicit device 106 and explicit device 108 are programmed through the Carte programming environment, which will be more fully described hereinafter and both are coupled to provide access a common memory 110.

In this architecture, the explicit and implicit processors 106, 108 are peers with respect to their ability to access system memory contents in the form of common memory 110. In this fashion, overhead associated with having both types of processors working together on the same program is minimized. This allows the SRC Carte programming tools to utilize whichever processor type is best for a given portion of the overall application without concern for control handoff penalties.

The implicit devices 106 may also be referred to as Dense Logic Devices (DLDs) and encompass a family of components that includes microprocessors, digital signal processors, as well as some ASICs. These processing elements are all implicitly controlled and typically are made up of fixed logic that is not altered by the user. These devices execute software-directed instructions on a step-by-step basis in fixed logic having predetermined interconnections and functionality.

On the other hand, the explicit devices 108 may also be referred to as Direct Execution Logic (DEL) and comprise a family of components that is explicitly controlled and is typically reconfigurable. This includes FPGAs, Field Programmable Object Arrays (FPOAs) and Complex Programmable Logic Devices (CPLDs). This set of elements enables a program to establish an optimized interconnection among the selected functional units in order to implement a desired computational, pre-fetch and/or data access, functionality for maximizing the parallelism inherent in the particular code.

Both the implicit device 106 (DLD) and explicit device 108 (DEL) processing elements are interconnected as peers to a shared system memory (e.g. common memory 110) in one fashion or another and it is not required that interconnects support cache coherency since data sharing can be implemented in an explicit fashion.

The DEL computing of the explicit device 108 uses dynamic logic, which conforms to the application rather than forcing the application into a fixed microprocessor architecture where one size must fit all. This delivers the most efficient circuitry for any particular code in terms of the precision of the functional units and the parallelism that can be found in the code. The result is a dynamic application specific processor that can evolve along with a given code and/or can be reprogrammed in a fraction of a second to handle different codes. DEL computing provides users the performance of a special purpose computer and the economy of a general-purpose machine.

SRC Computers' current general-purpose computer systems comprise MAPstation™ workstations (trademark of SRC Computers LLC), high performance rack-based systems, and airborne systems all as part of the SRC-7 product line. All systems use the same implicitly and explicitly controlled system components, as well as the same SRC Carte Programming Environment, allowing for complete portability of applications between systems.

The Carte Programming Environment makes this integration possible by enabling the programmer to utilize ANSI standard Fortran or C high-level languages to specify their application on both the implicit and explicit devices. The output from compilation in the Carte Programming Environment is a single, unified executable for the target SRC heterogeneous computer system.

In some currently available heterogeneous computer systems, a low bandwidth and high latency input/output bus separates the FPGA device from the CPU. The SRC IMPLICIT+EXPLICIT Architecture removes this limitation by enabling the CPU and MAP processors to operate as peers on system memory. This means only system memory bandwidth and latency limits these devices, which greatly improves overall application performance on a SRC system. The unified programming environment using standard languages and the implicit and explicit devices limited only by system memory characteristics of the IMPLICIT+EXPLICIT Architecture, provide the user with an easy-to-use high-performance application platform unmatched by any workstation or compute cluster node available today.

The IMPLICIT+EXPLICIT Architecture allows users to execute existing code, or easily recompile and develop new codes to take advantage of the power of the reconfigurable MAP processors in the system. This hardware and software architecture fully integrates microprocessor technology and reconfigurable MAP processors to deliver orders of magnitude increases in performance and reductions in power consumption. The SRC Carte Programming Environment eliminated the historic problems that programmers faced in getting microprocessor portions of code to work with reconfigurable processor portions.

The IMPLICIT+EXPLICIT Architecture is available in systems ranging from a single MAPstation workstation or embedded system to clusters to Hi-Bar switch-based configurations as will be more fully described hereinafter. All of these configurations use the same basic hardware and software building blocks resulting in complete code interoperability.

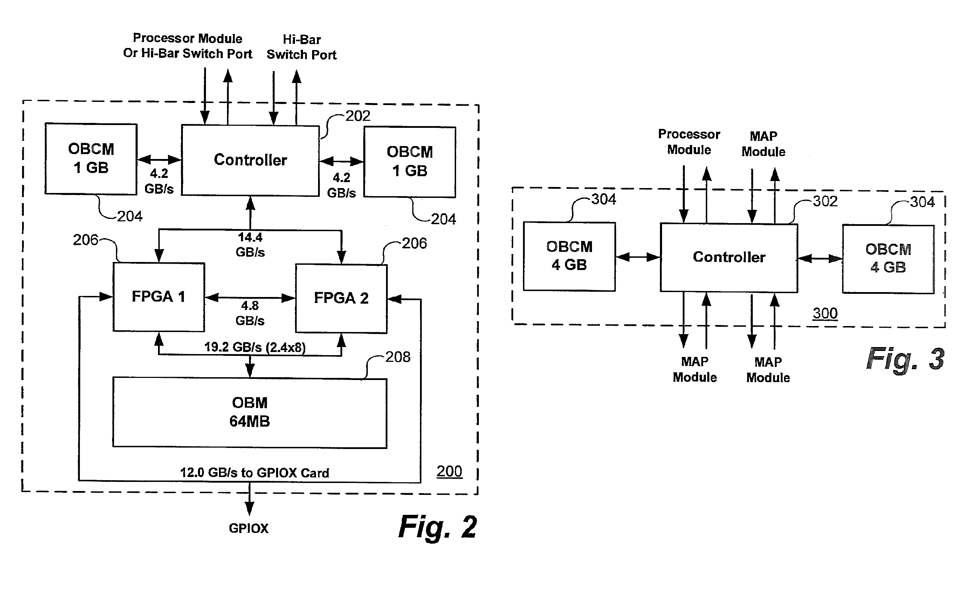

With reference additionally now to Fig. 2, a functional block diagram of a MAP processor 200 comprising reconfigurable direct execution logic is shown for use as an explicit device in the preceding figure utilizing field programmable gate arrays.

The MAP processor 200 comprises, in pertinent part a controller 202 for bidirectionally coupling the MAP processor 200 to another processor module or Hi-Bar switch port. A pair of high speed, onboard common memory arrays (OBCM), for example static random access memory (SRAM) of 1 GB each, are bidirectionally coupled to the controller 202 by respective buses having an available bandwidth of 4.2 GB/sec. A pair of FPGAs 206 (FPGA1 and FPGA2) are coupled to the controller through a bidirectional bus having a bandwidth of 14.4 GB/sec as well as to each other by a bus having a bandwidth of 4.8 GB/sec. The FPGAs 206 are also bidirectionally coupled to an onboard memory array (OBM) 208 of about 64 MB by a bus having a bandwidth of 19.2 GB/sec as well as to a general purpose I/O (GPIOX) port through a bidirectional bus having a bandwidth of 12.0 GB/sec.

The MAP processor 200 comprises a high performance DEL processor. The MAP processor 200 uses reconfigurable components in the form of FPGAs 206 to accomplish both control and user-defined compute, data pre-fetch, and data access functions. This compute capability is teamed with very high on and off-board interconnect bandwidth. The MAP processor 200 utilizes multiple banks of SRAM on-board memory 204 provide 19,200 MBs/sec. of local memory bandwidth. The MAP processor 200 is further provided with two separate sets of input and output ports with each port sustaining a data payload bandwidth of 3600 MB/sec. The MAP processor 200 also has two banks of SDRAM globally shared common memory that are accessible by any processor in the system. Each MAP processor 200 also has a GPIOX port sustaining an additional data payload of up to 12.0 GB/sec. for direct MAP processor 200 to MAP processor 200 connections or sensor data input.

The explicit devices are contained within the MAP processor 200. These devices may, for example, comprise two 150 MHz Altera Stratix™ II EP2S180 FPGAs 206 with direct access to each other, 64MB On-Board Memory (OBM) 208, the GPIOX port, and the interface controller 202. The interface controller 202 provides access to other processor modules and to the 2 GB of On-Board Common Memory (OBCM) 204. The aggregate sustained payload bandwidth between the MAP processor 200 and other processor modules is 14.4 GB/sec., or 7.2 GB/sec. per port pair.

The SDRAM OBM 208 provides 16 independent 64-bit memory references to the FPGAs 206 every clock cycle. This allows a maximum bandwidth between the OBM 208 and an FPGA 206 of 19.2 GB/sec. The data for the explicit portion of an application are allocated in the OBM 208 by the programmer, and the actual achievable bandwidth between the OBM 208 and the FPGAs 206 may be determined by the application requirements.

The two banks of OBCM 204 provided enable the programmer to specify a third level of data locality for their application. The second level of data locality is the OBM 208 and the first is the FPGA 206 internal memory. Typically, large application data sets are stored here and appropriate data subsets are moved to OBM 208 (or directly to the logic) for processing. These OBCM 204 banks are part of the globally shared memory space in a MAP processor 200 based computer system.

The GPIOX port provides direct access up to 12.0 GB/sec. to external devices (e.g. cameras, analog to digital converters, sensors, etc.) or allows chaining of other multiple MAP processors 200. The GPIOX interface is an open standard and is described in the GPIOX Hardware Specification document SWP-011-00.

With reference additionally now to Fig. 3, a functional block diagram of a multi-ported common memory 300 is shown for providing support for a dense logic device such as a commodity microprocessor and up to three MAP processors 200 (Fig. 2). The multi-ported common memory (MPCM) 300 comprises, in pertinent part, a controller 302 which provides bidirectional coupling to a processor module and up to three MAP modules. The multi-ported common memory 300, in the representative embodiment illustrated, also comprises a pair of 4 GB OBCM memory arrays.

Each MPCM 300 assembly for SRC-7 MAPstation systems has four output and four input ports. These ports allow the programmer to access two 16 GB Common Memory banks. The ports support one microprocessor module and up to three MAP processors. The intelligent DMA controller 302 on the MPCM 300 module is capable of performing complex DMA pre-fetch and data access functions such as data packing, strided access and scatter/gather, to maximize the efficient use of the system interconnect bandwidth. Interconnect efficiencies more than 10 times greater than a cache-based microprocessor using the same interconnect are common for these operations. Each input or output port sustains a yielded data payload of at least 3.6 GB/sec. with Single Error Correction and Double Error Detection (SECDED) implemented on each port.

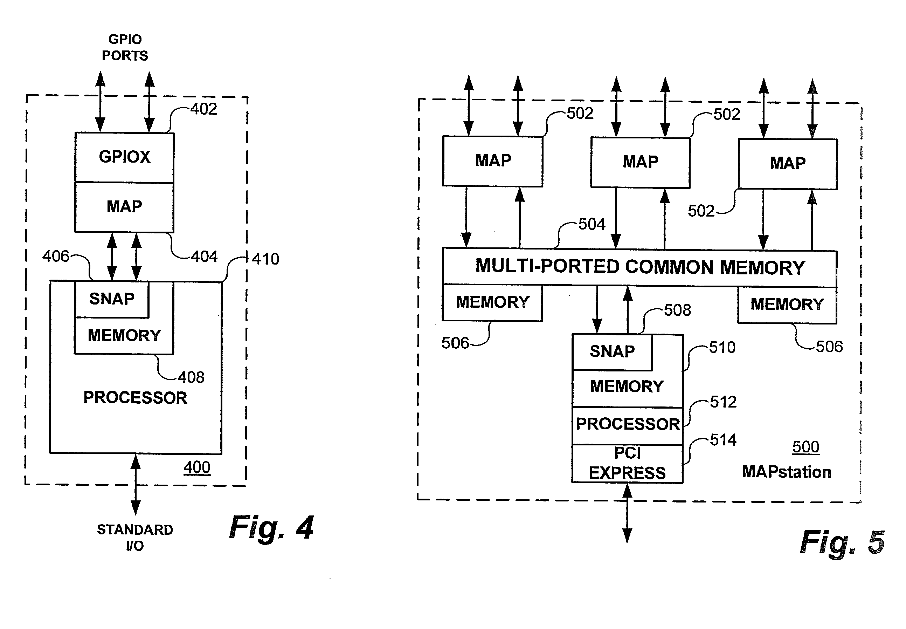

With reference additionally now to Fig. 4, a functional block diagram of a single MAP processor MAPstation 400 is shown. The MAPstation 400 illustrated comprises a GPIOX port 402 coupled to a MAP processor 404 as previously described with respect to Fig. 2. The MAP processor 404 is bidirectionally coupled to a SNAP™ port 406 (trademark of SRC Computers LLC) which is directly coupled in the memory space 408 of a processor 410.

This configuration of the SRC-7 MAPstation system contains one microprocessor module 410 and one MAP processor 404 with a direct interconnect. Since this system does not contain an MPCM module 300 (Fig. 3), only one MAP module may be installed.

The implicit DLD used in MAPstations is typically one of several commodity microprocessors. These third party commodity boards are then equipped with a SNAP 406 interface. The SNAP interface 406 allows commodity microprocessor boards to connect to, and share memory with, the MAP processors 404 and common memory nodes that make up the rest of the SRC system. A SNAP 406 module may be plugged directly into the DIMM connectors on the microprocessor motherboard and functions directly in the microprocessor 410 memory subsystem 408, instead of its I/O subsystem, allowing the system to sustain significantly higher interconnect bandwidths and lower latencies than I/O based connections. The SNAP 406 interface uses separate input and output paths with each path currently sustaining a data payload bandwidth of 3.6 GB/sec.

By using a SNAP 406 module to connect to the microprocessor 410 memory subsystem 408 instead of its I/O subsystem, such systems can sustain significantly higher interconnect bandwidths. The SNAP 406 module uses separate input and output ports with each port sustaining data payload bandwidth on the order of 3.6 GB/sec. and as high as 7.2 GB/sec. The SNAP 406 interface can either connect directly to a single MAP processor or to a Hi-Bar^{®} switch for system-wide access to multiple MAP processors, other microprocessors or Common Memory.

With reference additionally now to Fig. 5, a functional block diagram of a MAPstation system 500 is shown comprising three of the MAP processors of Fig. 2 interconnected via a multi-ported common memory module. The MAPstation system 500 comprises up to three MAP processors 502 coupled to a multi-ported common memory (MPCM) 504 as per Fig. 3. The MPCM 504 comprises a controller and associated memory arrays 506 as shown. The processor port of the MPCM 504 is coupled to a SNAP 508 interface coupled to the memory 510 subsystem of a processor 512 having, for example, a PCI Express bus interface 514. If a MAPstation system 500 is configured with an MPCM module, then its configuration may have up to three Series H MAP processors 502 in addition to the microprocessor module. The two OBCM banks comprising memory 506 can be populated with up to 16 GB of SDRAM each.

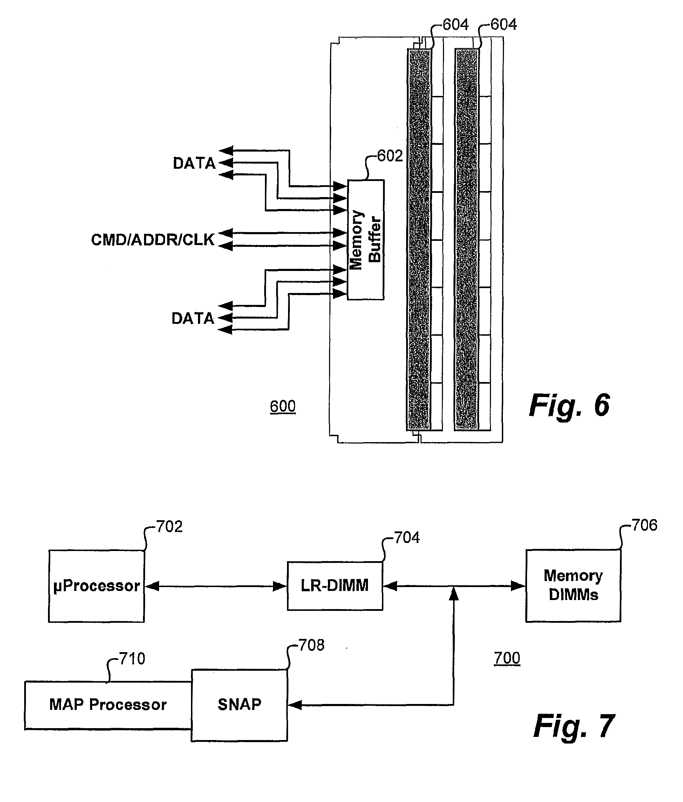

With reference additionally now to Fig. 6, a simplified illustration of a load-reduced dual in-line memory module (LR-DIMM) 600 is shown including the memory buffer 602 thereof. The LR-DIMM 600 module comprises a memory buffer 602 mounted to the module and multiple arrays of DRAM 604 mounted on both sides of the module as well. The memory buffer 602 functions to re-drive all of the command, clock and address signals as well as the data from the host memory controller. The memory buffer 602 functionally isolates the DRAM 604 from the host, thereby reducing the electrical load which, in turn, allows the computer system to operate at a higher speed for a given memory capacity.

With reference additionally now to Fig. 7, a block diagram of a representative embodiment of a computing system comprising a switch/network adapter port interface in accordance with the present invention is shown incorporating a direct execution logic element in a general purpose microprocessor based computer system 700.

The computer system 700 comprises a microprocessor 702 accessing LR-DIMM memory 704 which, in turn, has access to an array of memory DIMMs 706. A direct execution logic element in the form of a MAP processor 710 is coupled through a SNAP interface 708 to access both the LR-DIMM memory 704 and the memory DIMMs 706.

This figure illustrates one possible embodiment for a computing system comprising a switch/network adapter port interface incorporating memory resources selectively accessible by a direct execution logic element (MAP processor 710) and one dense logic device (microprocessor 702) utilizing LR-DIMM 704 to provide high speed interconnect between the two devices. Data and command information is passed between the microprocessor 702 and the MAP processor 710 through this interface. The interface is created by structuring the memory subsystem in such away as to enable the sharing of a region of the main DRAM memory space (memory DIMMs 706) by both the direct execution processor 710, as well as the microprocessor 702.

This may be effectuated by having the main DRAM system 706 memory divided into three separate regions, with each region having its own unique properties. The first region can be the area were the operating system (OS) of the microprocessor resides and is called system memory. The second region can be the area that is shared between the MAP processor 710 and the microprocessor 702 which would be a shared memory segment. The third area may then be used to provide communication and control information between the two processing elements 702, 710. This area would then utilize the tri-stating feature of the LR-DIMM 704 to allow the fast hand off of the control of the memory DIMMs 706.

In this representative embodiment, the microprocessor 702 would have a single memory controller and connection to a single set of memory DIMMs 706. However, this is not a requirement, in fact the microprocessor 702 can actually have any number of memory controllers, of which one or more are shared with one or more SNAP interfaces 708.

The overall concept is to use the isolation memory buffer feature of the LR-DIMM 704 to create a SNAP interface 708 that can readily function on a double data rate 3 (DDR3) memory bus. In this regard, a pair of LR-DIMM 704 memory buffers might be used. The upstream port of one of the memory buffers may be connected to the memory controller in the system chipset or the microprocessor 702. The upstream port of the other memory buffer might then be connected to the SNAP interface 708 FPGA. Further, at least one of the down stream ports of each of the memory buffers might then be connected to a common set of memory chips, with the connection forming the basis of a shared memory region. Other down stream ports might then be connected to an independent memory array and could then form private memory for either the microprocessor 702 or the SNAP interface 708. One rank of the upstream microprocessor 702 memory space would be set up to act as configuration/control registers in the SNAP interface 708. The startup sequence would then be such that the use of the shared memory region would be restricted and the system OS would not use it.

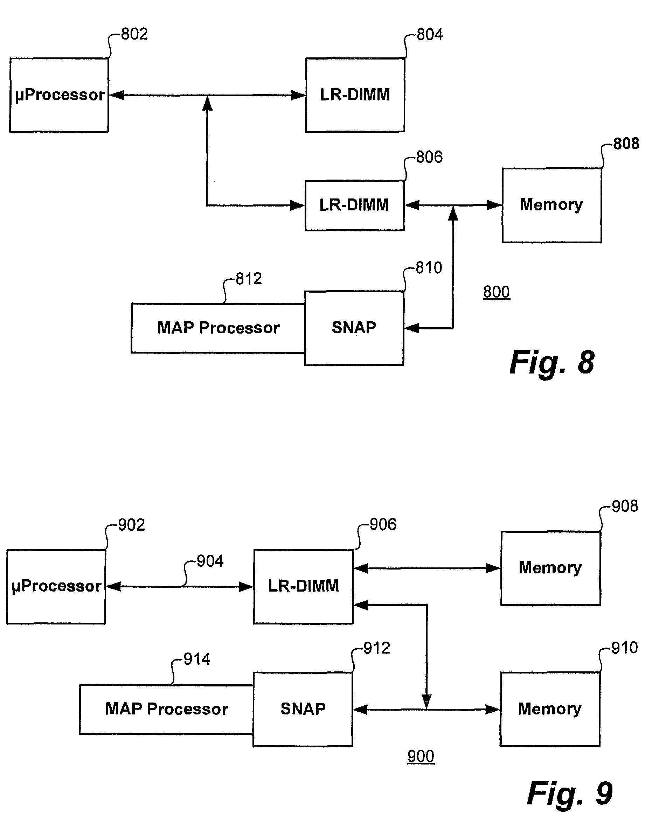

With reference additionally now to Fig. 8, a block diagram of another representative embodiment of a computing system comprising a switch/network adapter port interface in accordance with the present invention is shown in which the switch/network adapter port interface replaces one of the LR-DIMMs accessed by the microprocessor.

The computing system 800 illustrated comprises a microprocessor 802 coupled to LR-DIMMs 804 and 806 with the LR-DIMMS 806 coupled to system memory 808. A SNAP interface 810 and associated MAP processor 812 are coupled to the bus between LR-DIMM 806 and system memory 808. In this embodiment, of the computing system 800 the SNAP interface 810 replaces one of the LR-DIMMS coupled to the microprocessor 802. Therefore, the microprocessor 802 with at least one memory controller is connected to at least one set of LR-DIMMs 804, 806 and one or more of those LR-DIMMs is replaced with at least one SNAP interface 810.

With reference additionally now to Fig. 9, a block diagram of yet another representative embodiment of a computing system comprising a switch/network adapter port interface in accordance with the present invention is shown in which the rank multiplier capability of the LR-DIMM is utilized to enable the switch/network adapter port interface to connect into a microprocessor system that only supports a single rank of memory.

The computing system 900 illustrated comprises a microprocessor 902 coupled to LR-DIMM 906 by a memory bus 904. The LR-DIMM 906, in turn, is coupled to system memories 908, 910. A SNAP interface 912 and associated MAP processor 914 is coupled to system memory 910 as well as to LR-DIMM 906.

In computing system 900 the rank multiplier capability of the LR-DIMM 906 memory buffer is utilized to enable the SNAP interface 912 to connect into a microprocessor 902 system that only supports a single rank of memory. This might be the case because the speed of the memory bus cannot tolerate the loading effect of more than one rank of memory, or because of restrictions in the microprocessor 902 design. In fact, it is common for microprocessor 902 based systems to only support one rank of memory on the main memory bus. That is to say the memory bus 904 can only support one rank of DIMMs. But by employing the memory buffer of the LR-DIMM 906 as a rank multiplier, the SNAP interface 912 is connected up to the memory buffer on its own memory segment.

While there have been described above the principles of the present invention in conjunction with specific hardware and architecture, it is to be clearly understood that the foregoing description is made only by way of example and not as a limitation to the scope of the invention. Particularly, it is recognized that the teachings of the foregoing disclosure will suggest other modifications to those persons skilled in the relevant art. Such modifications may involve other features which are already known per se and which may be used instead of or in addition to features already described herein. Although claims have been formulated in this application to particular combinations of features, it should be understood that the scope of the disclosure herein also includes any novel feature or any novel combination of features disclosed either explicitly or implicitly or any generalization or modification thereof which would be apparent to persons skilled in the relevant art, whether or not such relates to the same invention as presently claimed in any claim and whether or not it mitigates any or all of the same technical problems as confronted by the present invention. The applicants hereby reserve the right to formulate new claims to such features and/or combinations of such features during the prosecution of the present application or of any further application derived therefrom.

As used herein, the terms "comprises", "comprising", or any other variation thereof, are intended to cover a non-exclusive inclusion, such that a process, method, article, or apparatus that comprises a recitation of certain elements does not necessarily include only those elements but may include other elements not expressly recited or inherent to such process, method, article or apparatus. None of the description in the present application should be read as implying that any particular element, step, or function is an essential element which must be included in the claim scope and THE SCOPE OF THE PATENTED SUBJECT MATTER IS DEFINED ONLY BY THE CLAIMS AS ALLOWED. Moreover, none of the appended claims are intended to invoke paragraph six of 35 U.S.C. Sect. 112 unless the exact phrase "means for" is employed and is followed by a participle.

## Claims

1. A computer system comprising:
at least one dense logic device;
at least one controller for coupling said at least one dense logic device to a control bus and one or more memory buses;
a plurality of memory slots coupled to said memory bus;
one or more adaptor ports associated with at least one of said plurality of memory slots coupled to said one or more memory buses, each of said adapter ports including associated memory resources; and
a direct execution logic element coupled to at least one of said adapter ports, said memory resources being selectively accessible by said at least one dense logic device and said direct execution logic element.

2. The computer system of claim 1 wherein said one or more memory slots coupled to said one or more memory buses comprise at least one LR-DIMM memory module slots.

3. The computer system of claims 1 or 2wherein said memory slots and said one or more memory buses are coupled using one or more isolation memory buffers.

4. The computer system of claims 1, 2 or 3 wherein said at least one adapter port comprises a memory buffer.

5. The computer system of any one of claims 2 to 4 further comprising:
a control bus coupled to said at least one dense logic device and said adapter port.

6. The computer system of claim 5 wherein said control bus indicates to said dense logic device r an arrival of data to said direct execution logic element on said memory module bus.

7. The computer system of any one of claims 2 to 6 wherein said adapter port comprises a dual in-line memory module slot connector for retention within said at least one of said plurality of memory module slots.

8. The computer system of any one of claims 2 to 7 further comprising:
an external device coupled to said direct execution logic element by a data connection.

9. The computer system of claim 8 wherein said external device comprises one of another computer system, switch or network.

10. The computer system of claims 8 or 9 wherein said direct execution logic element is operative to alter data received from said controller on said memory module bus prior to transmission on said data connection to said external device.

11. The computer system of any one of claims 8 to 10 wherein said direct execution logic element is operative to alter data received on said data connection from said external device prior to transmission to said controller on said memory module bus.

12. The computer system of any one of claims 8 to 11 wherein said direct execution logic element comprises:
at least one field programmable gate array configurable to perform an identified algorithm on an operand provided thereto on said memory module bus and said data connection.
